# EUROPÄISCHE PATENTANMELDUNG

(11) **EP 1 255 125 A1**
(43) Veröffentlichungstag der Anmeldung: **06.11.2002**
(21) Anmeldenummer: 02100412.2
(22) Anmeldetag: 25.04.2002
(51) Int. Cl.: G01T 1/20, G01T 1/202

(54) **Hybride zweidimensionale Szintillatoranordnung**

(30) Priorität: 28.04.2001 DE 10121018
(71) Anmelder: Philips Corporate Intellectual Property GmbH, 20099 Hamburg (DE); Koninklijke Philips Electronics N.V., 5621 BA Eindhoven (NL)
(72) Erfinder: Wieczorek, Herfried, Weisshausstrasse 2 52066, Aachen (DE); Morales-Serrano, Francisco, Weisshausstrasse 2 52066, Aachen (DE)
(74) Vertreter: Volmer, Georg, Dipl.-Ing.

(57) **Zusammenfassung**

Die Erfindung betrifft eine hybride zweidimensionale Szintillatoranordnung, die aus mehreren eindimensionalen Detektorstreifen gebildet wird. Die Detektorstreifen (1) werden aus Szintillatorstäbchen (3) und zwischen diese Szintillatorstäbchen geklebte Absorberschichten (2) gebildet. Die Detektorstreifen (1) werden parallel zueinander in eine Passform (4) eingesetzt. Die eindimensionalen Detektorstreifen lassen sich mit hoher Genauigkeit herstellen. Die Passform (4) enthält Stege (5), wobei die Detektorstreifen (1) zwischen die Stege (5) eingesetzt werden. Der entstehende Zwischenraum (6) über den Stegen (5a) und zwischen den Detektorstreifen (1) wird mit Röntgenstrahlen absorbierenden Schichten oder Material (7) ausgefüllt, wodurch eine Separation der Detektorstreifen in die zweite Richtung ermöglicht wird.

## Beschreibung

Die Erfindung betrifft eine zweidimensionale Szintillatoranordnung bei der in eine erste Richtung ausgedehnte Detektorstreifen Szintillatorstäbchen enthalten, die durch Absorberschichten voneinander getrennt sind.

Desweiteren betrifft die Erfindung einen Röntgendetektor mit einer Szintillatoranordnung. Weiterhin betrifft die Erfindung ein Röntgenuntersuchungsgerät mit einem Röntgendetektor mit einer Szintillatoranordnung und ein Verfahren zur Herstellung einer Szintillatoranordnung.

Röntgendetektoren werden in der Medizin und in der zerstörungsfreien Werkstoffprüfung eingesetzt. Ein Röntgendetektor ist in Pixel unterteilt, wobei jedem Pixel wenigstens ein Photosensor zugeordnet ist. Dabei wird der Röntgendetektor durch eine Szintillatoranordnung gebildet, die einer Photosensorenanordnung zugeordnet ist. Für den Nachweis von Röntgenstrahlung werden Festkörperszintillatoren in Verbindung mit Halbleiterphotodioden oder einer Photosensorenanordnung eingesetzt. Die Leuchteigenschaften des Festkörperszintillators wird dazu ausgenutzt, die Röntgenstrahlung zunächst in niederenergetische und insbesondere in sichtbare Strahlung umzuwandeln. Diese sichtbare Strahlung wird dann über einen Strahlungsdetektor für sichtbares Licht, der bspw. aus Photosensoren besteht, nachgewiesen. Ebenso kann die Röntgenstrahlung in direkt konvertierenden Halbleitermaterialien direkt in elektrische Ladungen umgewandelt werden, die dann ausgelesen werden.

Mit steigender Anzahl der Pixel eines Röntgen- oder Strahlungsdetektors ist es notwendig, die einzelnen Pixel voneinander abzuschirmen, so dass ein Übersprechen von einem Pixel zu einem anderen durch Fluoreszenz-Röntgenquanten unterbunden wird. Dieses Übersprechen zwischen den einzelnen Pixeln führt zu einer schlechteren Bildauflösung. Die einzelnen Pixel werden dazu durch Absorberschichten voneinander getrennt, so dass ein Übersprechen von Röntgenquanten und/oder Lichtquanten von einem Pixel zum benachbarten verhindert wird.

Für eine geringe Anzahl von Pixeln ist prinzipiell der Aufbau aus einzelnen Szintillatorelementen und Absorberblechen möglich.

Es ist möglich Röntgendetektoren mit einer eindimensionalen Ausdehnung mit einer hinreichenden Genauigkeit herzustellen. Dazu werden größere Scheiben aus Szintillatorkristallen zersägt und die einzelnen Szintillatorstäbe abwechselnd mit Absorberblechen, z.B. reflektierend beschichteten Metallfolien oder einer Kombination aus Metall- und Kunststofffolien, zu eindimensional strukturierten Detektorstreifen zusammengefügt.

Die Produktion eindimensionaler Detektorstreifen funktioniert mit einer hohen Genauigkeit. Diese Genauigkeit lässt sich jedoch bei der Herstellung zweidimensionaler Szintillatoranordnung oder Röntgendetektoren nicht erreichen. Um eine hohe Bildqualität zu erreichen ist es jedoch notwendig, dass jedes Pixel des Szintillators einem definierten Photosensor zugeordnet ist. Die Pixel weisen dabei Größen im Bereich von 1-3 mm² auf, so dass sich Abweichungen bei größeren Röntgendetektoren schnell fortpflanzen und somit die erreichbare Bildqualität erheblich mindern.

In neuartigen Röntgenuntersuchungsgeräten werden großflächige zweidimensionale Röntgendetektoren eingesetzt. Mittels dieser zweidimensionalen Röntgendetektoren lässt sich mit einer geringeren oder mit der gleichen Menge Röntgenstrahlung eine höhere Bildauflösung erreichen, was zu einer höheren Bildqualität und letztlich zu einer geringeren Strahlenbelastung des zu untersuchenden Patienten führt.

Aus der US 5059800 ist ein zweidimensionaler Detektor bekannt, der aus einem Photodetektorarray und einem optisch angekoppelten Szintillatormosaik besteht. Dieses Szintillatormosaik besteht aus Leuchtstoffeinzelelementen, die durch Sägen einer Leuchtkeramikplatte erzeugt und durch Einbringen einer Reflektormasse aus Epoxidharz und Titanoxidfüllung optisch separiert werden. Das Einbringen der Reflektormasse in durch Sägen erzeugte Kerben in der Leuchtstoffkeramikplatte erfolgt nachträglich und erfordert hohe Schnittbreiten auf zumindest einer Seite der Keramikplatte. Dies führt zu unterschiedlich großen Lateralflächen und zu unterschiedlichen Leuchtstoffrasterungen auf der Ober- und der Unterseite der Leuchtstoffkeramikplatte. Durch die Sägetechnik kann außerdem der Abstand der Detektorstreifen nicht beliebig klein gewählt werden, wodurch ein ungünstiger Flächennutzungsgrad entsteht, da hohe Teile des Detektorvolumens nicht zur Absorption von einfallender hochenergetischer Röntgenstrahlung benutzt werden kann.

Aufgabe der Erfindung ist es deshalb, eine Anordnung anzugeben, deren Herstellung mit hoher Genauigkeit und mit vertretbaren Kosten realisierbar ist.

Diese Aufgabe wird durch eine Szintillatoranordnung gelöst, bei der Detektorstreifen Szintillatorstäbchen enthalten, die durch Absorberschichten voneinander getrennt sind und bei der wenigstens zwei dieser Detektorstreifen im wesentlichen parallel zueinander in einer Passform angeordnet sind.

Der Erfindung liegt der Gedanke zu Grunde, dass sich eindimensionale Detektorstreifen mit einer hohen Genauigkeit herstellen lassen. Bei Anwendung des selben Verfahrens zur Herstellung dieser Detektorstreifen zur Erzeugung von zweidimensionalen Detektoren kommt es jedoch zu höheren Ungenauigkeiten.

Deshalb wird vorgeschlagen eine Hybridkonstruktion für zweidimensionale Szintillatoranordnungen zu benutzen. Dazu werden Detektorstreifen hergestellt, die Szintillatorstäbchen und Absorberschichten aufweisen, wobei die Absorberschichten die Szintillatorstäbchen von einander separieren. Die Detektorstreifen werden durch Sägen von Szintillatorwafern in Streifen, Verkleben mit Absorberschichten und erneutem Zersägen in einer Richtung, senkrecht zur ursprünglichen Sägerichtung, hergestellt. Dieser Schritt ist hochgenau möglich, auch dünne Absorber, z.B. Bleischichten in einer Dicke von 50µm sind so realisierbar.

Diese eindimensionalen Detektorstreifen, die eine entsprechende Anzahl von Szintillatorstäbchen mit dazwischen liegsnden Absorberschichten enthalten, lassen sich in vertretbaren Grenzen in beliebiger Länge herstellen. Diese eindimensionalen Detektorstreifen mit den Szintillatorstäbchen und den Absorberschichten werden in die hochpräzise Passform eingepasst und dort fixiert, bspw. verklebt. Dadurch sind die Abweichungen eine derartig zusammen gesetzten zweidimensionalen Szintillatoranordnung sehr gering zu halten. Als Material für diese Passform sind insbesondere Siliziumwafer oder photoätzbares Glas geeignet. Diese Materialien können durch Phototechniken exakt, kostengünstig und mit einem hohem Höhen- zu Seitenverhältnis strukturiert werden.

Um die eindimensionalen Detektorstreifen in die Passform einpassen zu können, weist diese Passform in einer bevorzugten Ausführungsform Stege auf, die in einem Rahmen angeordnet sind. Dabei verlaufen die Stege im wesentlichen parallel zueinander und sind an gegenüberliegenden Seiten des Rahmens der Passform befestigt. Durch diese Stege werden Zwischenräume gebildet, die den Abmessungen der Detektorstreifen entsprechen, so dass die Detektorstreifen in diese Zwischenräume eingesetzt werden können. Diese Stege trennen somit die benachbarten Detektorstreifen. Die Stege erleichtern ein Einsetzen der Detektorstreifen und ermöglichen eine hochpräzise Ausrichtung der Detektorstreifen in eine erste und in eine zweite Richtung.

In einer bevorzugten Ausführungsform der Erfindung wird vorgeschlagen, die Passform mit den Stegen und dem Rahmen aus Material herzustellen, dass für Röntgenstrahlen undurchlässig ist. Dadurch wird ein Übersprechen von Fluoreszenz-Röntgenquanten auch in die zweite Richtung verhindert.

Vorteilhafterweise umfasst die Passform eine Bodenplatte, die aus einem für Licht durchsichtigen Material ausgebildet ist. Dadurch können die aus den Szintillatorstäbchen austretenden Lichtstrahlen ungehindert zu der unter der Szintillatoranordnung angeordneten Photosensoranordnung durchdringen. Die Bodenplatte erhöht die Stabilität der Szintillatoranordnung Gegsbenenfalls kann sie nach dem Einsetzen der Detektorstreifen in die Passform entfernt werden. In diesem Fall ist es unerheblich, ob sie durchsichtig ist oder nicht. Die derartige Szintillatoranordnung mit Passform wird mit der Photosensorenanordnung und gegebenenfalls mit einer dazwischenliegenden Zwischenschicht verbunden, bspw. verklebt.

In einer vorteilhaften Ausgsstaltung der Erfindung sind der Bodenplatte Pigmente beigemischt oder die Bodenplatte ist aus einem teilweise absorbierenden Material hergestellt, so dass eine gewisse Absorption der austretenden Lichtstrahlen auftritt. Dadurch wird ein Übersprechen der Lichtquanten unterhalb der Szintillatoranordnung verhindert.

In einer bevorzugten Ausführungsform der Erfindung wird vorgeschlagen, dass die Stege den zwischen den Detektorstreifen gebildeten Raum nur teilweise ausfüllen. Dieser Raum wird durch die Höhe der Detektorstreifen und die Breite der Stege über die gesamte Länge des Röntgendetektors gebildet. Dazu sind diese Stege bspw. an ihrem oberen Ende schmaler als am unteren Ende, an dem sie gegebenenfalls auf einer Bodenplatte angeordnet sind. Die dadurch gebildeten spitzen Stege ermöglichen somit ein einfaches Einlegen bei gleichzeitiger Realisierung einer hohen Genauigkeit. Um ein Übersprechen von Röntgen- und/oder Lichtquanten in die zweite Richtung zu verhindern, wird der Raum mit einem Röntgenstrahlen absorbierendem Material aufgefüllt. Dadurch entsteht der Vorteil, dass die Passform nicht unbedingt aus einem für Röntgenstrahlen undurchlässigem Material hergestellt sein muss, da die Separierung in die zweite Richtung durch das in den entstehenden Zwischenraum einzufüllende Röntgenstrahlen absorbierende Material realisiert wird.

Durch dieses Einsetzen von eindimensionalen Detektorstreifen in die hochgenaue Passform entfällt ein weiterer Sägeschritt der nach dem bekannten Verfahren zu einer nicht akzeptablen Ungenauigkeit führt. Außerdem hat die Szintillatoranordnung neben der hohen Präzision auch eine erhöhte Stabilität, da die Passform aus sehr stabilen Material herstellbar ist.

Um die Detektorstreifen in die Passform einpassen zu können, weisen die Stege der Passform in einer vorteilhaften Ausgestaltung nicht die volle Höhe der Szintillatorstäbchen oder des Detektorstreifens auf. Dazu sind die Stege nur im unteren Bereich der Detektorstreifen ausgebildet, so dass eine ausreichende Fixierung und Ausrichtung der Detektorstreifen realisierbar ist. Der verbleibende Raum wird mit Absorbermaterial ausgefüllt.

In einer vorteilhaften Ausgestaltung der Erfindung ist die Passform einstückig ausgebildet. Dadurch wird eine sehr hohe Genauigkeit der Passform erreicht, da die Abmessungen zwischen Rahmen und Stegen schon bei der Herstellung exakt ausgebildet werden und nicht durch ein späteres Zusammensetzten weitere Ungenauigkeiten auftreten können.

Eine einstückige Passform ist durch Fotoätzen realisierbar.

Dieser Hybridaufbau des Szintillatormoduls ist insbesondere vorteilhaft, wenn die Absorberschichten in die erste Richtung dünn ausgebildet sein sollen und in die zweite Richtung mit einer anderen Weite ausgebildet sein sollen. Dies ist insbesondere dann der Fall, wenn die unter der Szintillatoranordnung angeordnete elektronische Schaltung auf einem CMOS-Chip gegen die Röntgenstrahlen geschützt werden soll. Die exakte Positionierung der Stege mit dem Absorbermaterial über den elektronischen Schaltungen wird hier durch die exakten Maße der Glas- oder Siliziumpassform sichergestellt.

Insbesondere bei einem Computertomographiedetektor auf CMOS-Basis ist es notwendig die Absorberschichten in die erste Richtung dünner auszubilden als in die zweite Richtung.

Der Schutz der elektronischen Schaltung vor der Röntgenstrahlung wird entweder durch Verwendung schwermetallhaltiger photostrukturierbarer Gläser oder durch Auffüllen des verbleibenden Raumes über den Stegen zwischen den einzelnen Detektorstreifen durch röntgenabsorbierende Schichten oder Materialen sichergestellt. Dazu können niedrig schmelzende Metalllegierungen oder schwermetallhaltige Farben verwendet werden.

Das Übersprechen zwischen den einzelnen Pixeln durch Fluoreszenz- Röntgenquanten wird in der ersten Richtung durch die dünnen Absorberschichten bspw. aus Blei unterbunden und in der zweiten Richtung durch das schwermetallhaltige Glas oder die oben erwähnten auf die Passform aufgetragenen Röntgenstrahlen absorbierenden Schichten.

Im Falle einer aus Silizium hergestellten einstückigen Passform, die nur wenige hundert µm hoch ist, ist das Übersprechen im Bereich der Passform unproblematisch, da der Röntgen-Crosstalk nur im Bereich der Absorption der Röntgenquanten, also im obersten Bereich der Szintillatorkristalle, stattfinden kann, in dem die Trennung durch Absorberschichten und Stege mit Absorbermaterial sichergestellt ist.

Die Aufgabe wird auch durch einen Röntgendetektor mit einer Szintillatoranordnung nach den Ansprüchen 1 bis 8 zur Umwandlung von Röntgenstrahlung in Licht und einer Photosensorenanordnung zur Umwandlung des Lichts in elektrische Strahlung gelöst.

Weiterhin wird die Aufgabe durch ein Röntgenuntersuchungsgerät gelöst mit einem Röntgendetektor nach dem Anspruch 10 und einer dem Röntgendetektor zugeordneten Röntgenstrahlungsquelle.

Die Aufgabe wird auch durch ein Verfahren zur Herstellung einer Szintillatoranordnung gelöst, bei dem in eine erste Richtung ausgsdehnte Detektorstreifen aus Szintillatorstäbchen und mit diesen Szintillatorstäbchen verklebten Absorberschichten gebildet werden und bei dem mehrere dieser derartig gebildeten Detektorstreifen nebeneinander in eine zweite zur ersten rechtwinkligen Richtung in einer Passform angeordnet werden.

Nachfolgend wird anhand der Figuren ein Ausführungsbeispiel näher erläutert. Es zeigen:
- Fig.1: einen eindimensionalen Detektorstreifen in Seitenansicht
- Fig.2: eine hybride zweidimensionale Szintillatoranordnung in der Ansicht von oben
- Fig.3: eine detaillierte Seitenansicht mit spitzen Stegen
- Fig.4: eine detaillierte Seitenansicht mit Stegen mit geringer Höhe.

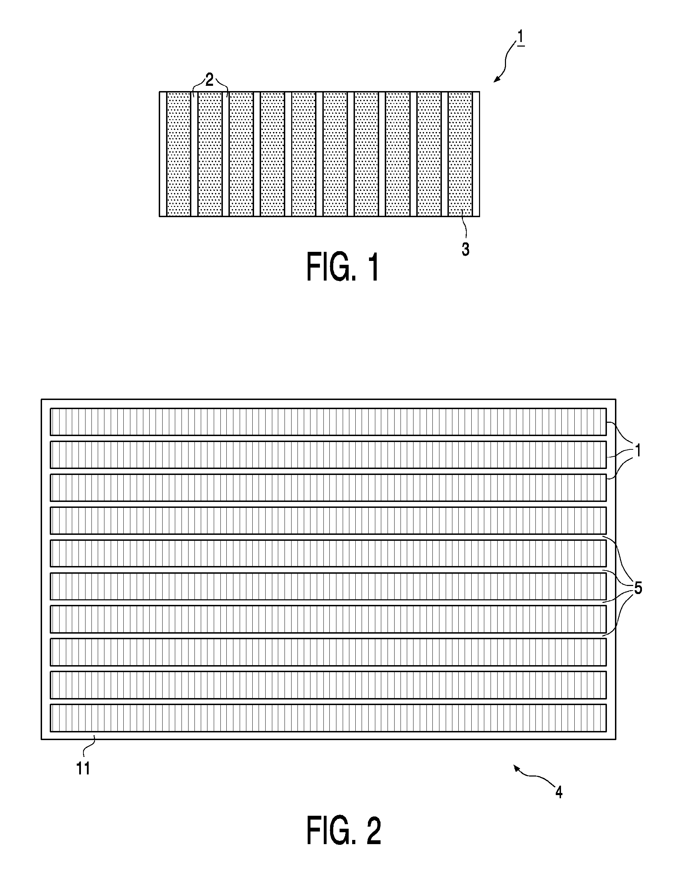

In Fig.1 ist ein eindimensionaler Detektorstreifen 1 dargestellt, welcher aus Szintillatoistäbchen 3 und aus dazwischen angsordneten Absorberschichten 2 besteht. Diese Szintillatorstäbchen 3 werden durch Sägen von Szintillatorwafern in Streifen hergestellt. Diese Streifen werden dann mit den Absorberschichten verklebt und mit einem weiteren Sägsvorgang in einer Richtung senkrecht zur ursprünglichen Sägerichtung hergestellt. Die Produktion dieser eindimensionalen Detektorstreifen 1 funktioniert mit einer geometrischen Genauigkeit von 10 µm Abweichungen von einem idealen Gitter auf 2cm Länge.

Fig.2 zeigt eine hybride zweidimensionale Szintillatoranordnung von oben Dabei sind die eindimensionalen Detektorstreifen 1 dargestellt. Diese eindimensionalen Detektorstreifen 1 werden in die Passform 4, die die Größe der gesamten Röntgendetektorfläche einnimmt, eingesetzt. Diese Passform 4 umfasst einen der Röntgendetektorfläche angepassten Rahmen 11 in dem Stege 5 angeordnet sind, die an die Form der eindimensionalen Detektorstreifen 1 angepasst sind. Die Detektorstreifen 1 werden durch die Stege 5 voneinander getrennt, so dass ein Übersprechen von Röntgenquanten verhindert wird.

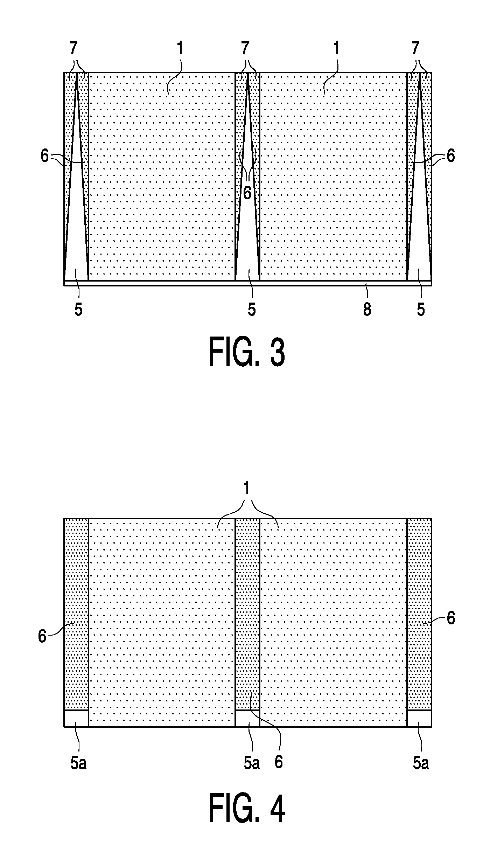

Fig. 3 zeigt eine Seitenansicht der hybriden zweidimensionalen Szintillatoranordnung. Dabei sind die Stege 5 auf der Bodenplatte 8 angeordnet, wobei die Stege 5 hier an ihrer oberen Seite eine schmalere Abmessung aufweisen, als an der Seite, an der sie auf der Bodenplatte 8 aufliegen. Diese spitze Form der Stege 5 ermöglicht ein einfaches Einlegen der eindimensionalen Detektorstreifen 1. Der Zwischenraum 6 zwischen den Detektorstreifen und über den Stegen 5 ist mit Röntgenstrahlen absorbierenden Schichten 7 oder Material ausgefüllt. Die Röntgenstrahlen absorbierenden Schichten können für Röntgenstrahlen undurchlässiges Glas oder durch Röntgenstrahlen absorbierendes Pulver gebildet werden. Dieses Pulver kann bspw. nachträglich in den verbleibenden Raum, der einerseits durch den Steg 5 und andererseits durch die eindimensionalen Detektorstreifen 1 gebildet wird, eingefüllt werden.

Fig.4 zeigt eine Seitenansicht einer hybriden zweidimensionalen Szintillatoranordnung. Dabei sind die Stege 5a wesentlich kleiner ausgebildet, als die Höhe der eindimensionalen Detektorstreifen 1. Dadurch wird es möglicht, die Passform 4 entsprechend einfach herzustellen. Zwischen diese Stege 5a werden die eindimensionalen Detektorstreifen 1 eingefügt. Der sich bildende Zwischenraum 6 zwischen den eindimensionalen Detektorstreifen 1 wird mit Röntgenstrahlen absorbierendem Material 7 aufgefüllt. Die Passform 4 mit derartigen Stegen 5a mit geringer Höhe kann bspw. durch einen geätzten Siliziumchip realisiert werden, so dass auch hier eine sehr hohe Genauigkeit erreicht wird.

Die Stege können auch über die gesamte Länge des Röntgendetektors unterschiedliche Höhen aufweisen, so dass in einem mittleren Bereich des Röntgendetektors die Stege höher ausgsbildet sind als in der Nähe des Rahmens. Es sind auch Stege realisierbar, die nur eine sehr geringe Höhe im Verhältnis zu der Höhe der einzulegenden Detektorstreifen aufweisen. Um bspw. ein maschinelles Einlegen der Detektorstreifen zu erleichtern, können die im allgemeinen niedrigen Stege in Abständen bis auf die volle Höhe der Detektorstreifen anwachsen.

Je nach Art des Röntgendetektors können die Stege über die Breite des Rahmens der Passform unterschiedliche Breiten aufweisen, da bspw. im mittleren Bereich des Röntgendetektors die Auflösung höher ist.

In einer weiteren Ausführungsform werden die Szintillatorstäbchen vor dem Verkleben oder Verbinden mit den Absorberschichten mit einer reflektierenden Schicht überzogen. Ebenso können die Detektorstreifen nach dem Verkleben mit einer Licht reflektierenden Schicht ummantelt werden, jedoch nicht auf der Seite die für den Lichtaustritt vorgesehen ist, also die untere Seite der Szintillatoranordnung oder die Seite, die der Seite gegenüberliegt, auf der die Röntgenstrahlen eintreffen. Um Lichtquanten, die nach oben hin zur Einfallsrichtung der Röntgenstrahlen zurückstrahlen vor einem Austritt nach oben zu hindern, wodurch Verluste an der Signalhöhe entstehen, wird die Szintillatoranordnung auf der Oberseite mit einer für Lichtstrahlen reflektierenden Schicht überzogen. Beim Einsetzen der Detektorstreifen in die Passform liegt dazu eine Abdeckplatte unter der Passform, wobei die Licht reflektierende Seite der Abdeckplatte der Passform und den Detektorstreifen zugewendet ist. Nach dem Herstellungsvorgang wird die gesamte Szintillatoranordnung mit der Abdeckplatte umgedreht, so dass die Röntgenstrahlung von oben auf die Abdeckplatte auftrifft, diese passiert, in die Szintillatorstäbchen eindringt, dort in Licht umgewandelt wird und das Licht durch die reflektierenden Seitenbeschichtungen der Szintillatorstäbchen und die oben liegende reflektierende Abdeckplatte zum Austritt nach unten zu der Photosensorenanordnung gezwungen wird.

## Patentansprüche

1. Szintillatoranordnung
bei der Detektorstreifen (1) Szintillatorstäbchen (3) enthalten, die durch Absorberschichten (2) voneinander getrennt sind
und bei der wenigstens zwei Detektorstreifen im wesentlichen parallel zueinander in einer Passform (4) angeordnet sind.

2. Szintillatoranordnung nach Anspruch 1,
**dadurch gekennzeichnet,**
**dass** die Passform (4) Stege (5) und einen Rahmen (11) umfasst, wobei die Stege parallel zueinander angsordnet sind und an gegenüberliegenden Seiten des Rahmen befestigt sind.

3. Szintillatoranordnung nach Anspruch 1 und 2,
**dadurch gekennzeichnet,**
**dass** die Passform (4) für Röntgenstrahlen undurchlässig ausgebildet ist.

4. Szintillatoranordnung nach Anspruch 1 und 2,
**dadurch gekennzeichnet,**
**dass** die Stege (5) und/oder der Rahmen (11) auf einer für Licht durchsichtigen Bodenplatte (8) ausgebildet sind.

5. Szintillatoranordnung nach Anspruch 4,
**dadurch gekennzeichnet,**
**dass** die Bodenplatte (8) einen mittels Pigmentbeimischung einstellbaren Absorptionsgrad aufweist, um ein Übersprechen von Lichtquanten benachbarter Pixel zu verhindern.

6. Szintillatoranordnung nach Anspruch 1 und 2,
**dadurch gekennzeichnet,**
**dass** die Stege (5 und 5a) den zwischen den Detektorstreifen (1) gebildeten Zwischenraum (6) nur teilweise ausfüllen.

7. Szintillatoranordnung nach Anspruch 3,
**dadurch gekennzeichnet,**
**dass** die Zwischenräume (6) mit einem Röntgenstrahlen absorbierenden Material (7) ausgefüllt sind.

8. Szintillatoranordnung nach Anspruch 1,
**dadurch gekennzeichnet**,
die Passform (4) einstückig ausgebildet ist.

9. Röntgendetektor mit einer Szintillatoranordnung nach den Ansprüchen 1 bis 8 zur Umwandlung von Röntgenstrahlung in Licht und einer Photosensorenanordnung zur Umwandlung des Lichts in elektrische Ladungen.

10. Röntgenuntersuchungsgerät mit einem Röntgendetektor nach Anspruch 9 und einer dem Röntgendetektor zugeordneten Röntgenstrahlungsquelle.

11. Verfahren zur Herstellung einer Szintillatoranordnung, bei dem in eine erste Richtung ausgedehnte Detektorstreifen (1) aus Szintillatorstäbchen (3) und diesen Szintillatorstäbchen zugeordneten Absorberschichten (2) gebildet werden und bei dem wenigstens zwei dieser derartig gebildeten Detektorstreifen im wesentlichen parallel zueinander in einer Passform (4) angeordnet werden.
